# EUROPEAN PATENT SPECIFICATION

(11) **EP 0 478 524 B1**
(45) Date of publication and mention of the grant of the patent: **10.05.1995**
(21) Application number: 91850223.8
(22) Date of filing: 16.09.1991
(51) Int. Cl.: A47J 17/18

(54) **A peeling device for vegetable products**
Schälmaschine für Gemüse
Appareil pour éplucher des produits végétaux

(30) Priority: 28.09.1990 SE 9003083
(43) Date of publication of application: 01.04.1992
(73) Proprietor: LIMAS AB, S-29600 Ahus (SE)
(72) Inventor: Jönsson, Bo, S-296 00 Ahus (SE)
(74) Representative: Linde, Leif

(56) References cited:
- EP-A- 0 428 059
- DE-A- 2 244 786
- DE-C- 802 401
- FR-A- 521 107
- FR-A- 2 135 705
- FR-A- 2 135 705

## Description

A previous known peeling device for batchwise peeling of vegetable products, for example a peeling device of the type described in FR-A-2 135 705, comprises a container in which the vegetables are placed. The container consists of a circular bottom and a side wall which is in a horizontal section of a substantially circular shape. In the container there are provided peeling means adapted to remove the peels of the vegetable products at a relative movement and an engagement between the vegetable products and the peeling means. In accordance with FR-A-2 135 705 the peeling means are constituted by a cutting coating at the inside of the side wall and the bottom. The coating can consist of for example carborundum grits. In the peeling device of FR-A-2 135 705 the relative movement and the engagement between the vegetable products and the cutting coating is provided by the fact that the bottom of the container is constituted by a plate which is rotatable around a vertical axis and which at the rotation due to the centrifugal force displaces the vegetable products towards the side wall and at the side wall moves the vegetable products around the lower section of the periphery of the container. In the peeling device according to FR-A-2 135 705 the bottom and the side wall of the container are provided with through openings in the form of perforations to allow waste material to depart from the container.

A drawback of the previously known peeling devices of the type for batchwise peeling is that it is necessary now and then during the peeling operation or at least at the end thereof to flush away from the container the waste material produced during the peeling. In practice it is necessary either to peel relatively small batches or to flush away the waste material at several times as the existence of the waste material in the container during the peeling operation substantially reduces the effectivity of the peeling. This drawback is only partially avoided by means of the perforations of the peeling device according to FR-A-2 135 705 and these perforations do not set aside the requirement for supply of flushing water during the peeling operation.

The object of the invention is to provide a peeling device for batchwise peeling of vegetable products which device does not require the supply of flushing water during the peeling operation.

In order to comply with this object the peeling device according to the invention is characterized in that the through openings are constituted by radially extending slots intersecting a peripheral edge portion of the circular bottom and by vertical slots provided at least at the lower portion of the side wall.

In a peeling device for batchwise peeling according to the invention the waste material produced during the peeling can depart from the container without the requirement for supply of flushing water. The capacity of peeling as well as the cleanness of the peeled product represent a substantial improvement in relation to the previously known peeling devices for batchwise peeling.

In a preferred embodiment of the invention the edge portion of the circular bottom is of somewhat conical shape providing a concave basic shape of the bottom.

Preferably the side wall is constituted by a number of substantially vertically oriented bars which are only at their upper ends fastened to a peripheral edge flange at at distance from each other for providing the vertical slots between the bars.

It is also preferred that the relative movement and engagement between the vegetable products and the peeling means are in a previously known way provided by rotating the bottom around a vertical axis so that the vegetable products are displaced towards the side walls and are peeled by the engagement with the carborundum grits on the side wall as well as on the bottom.

An embodiment of the invention shall be described in the following with reference to the accompanying drawings.

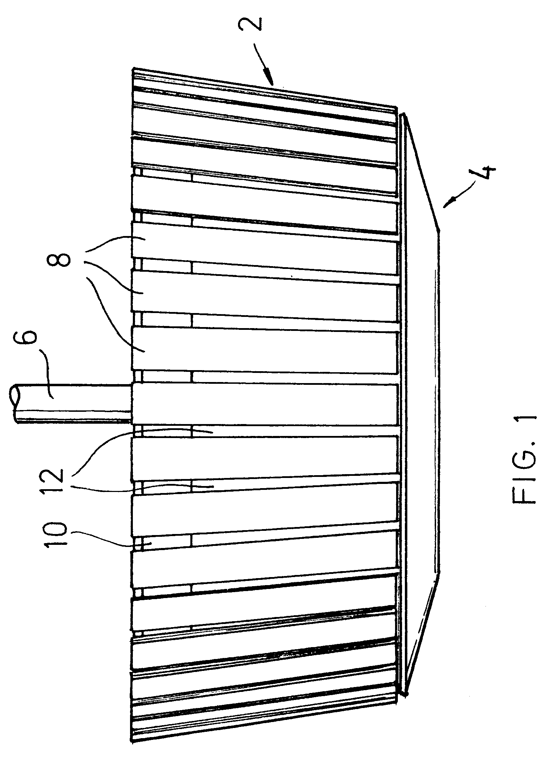

Fig. 1 is a side view of a peeling device according to the invention.

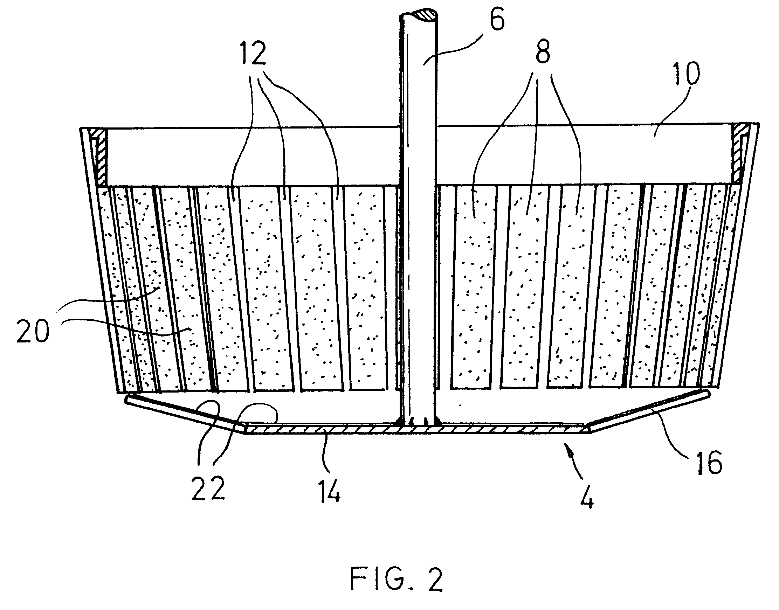

Fig. 2 is a vertical section of the peeling device shown in Fig. 1.

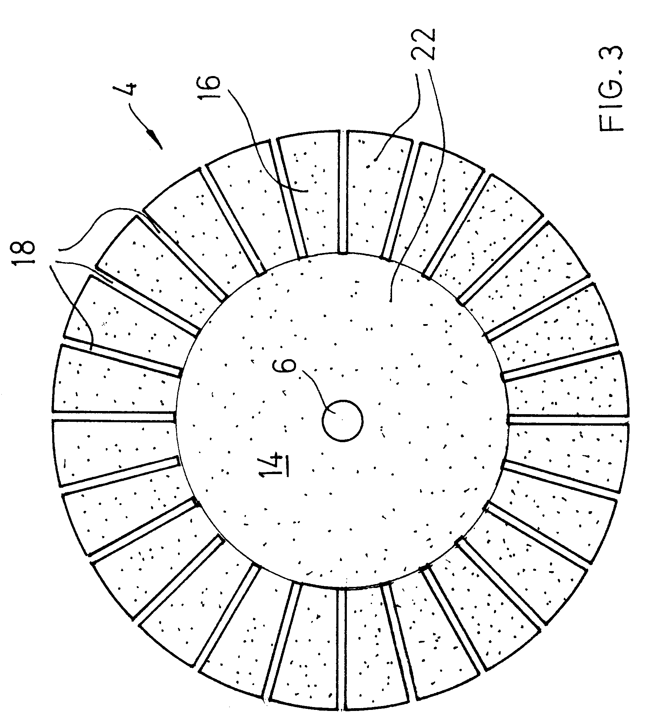

Fig. 3 is a plan view of the peeling device shown in Figs. 1 and 2.

The peeling device shown in the drawings and designed according to the invention is adapted for the peeling of vegetable products, preferably potatoes. The peeling device is of the type for batchwise peeling i.e. the peeling device is supplied with a certain amount of non-peeled product whereupon the peeling operation is conducted and the peeled product is removed from the peeling device, a new batch of non-peeled product is supplied and so on. The peeling device is formed as a bowl-shaped container the main parts of which are constituted by a side wall 2 which is in horizontal section of substantially circular shape widening somewhat in the direction upwards and a circular, plate-shaped bottom 4 which is separate from the side wall 2. The bottom 4 is supported by a vertical shaft 6 and is freely rotatable in relation to the side wall 2.

The side wall 2 is constituted by a number of a substantially vertically oriented bars 8, for example consisting of flats, the bars being at their upper ends fastened to a peripheral edge flange 10. The bars 8 are fastened to the flange 10 at some distance from each other so that there are formed openings in the form of vertical slots 12 betwen the bars 8.

The bottom 4 has the form of a circular plate having a completely flat central portion 14 and an edge portion 16 of somewhat conical shape so that the basic shape of the plate is somewhat concave. The edge portion 16 is intersected by openings in the form of radially extending slots 18.

As mentioned the plate shaped bottom 4 is supported by the shaft 6 which is firmly connected with the center of the central portion 14. The bottom 4 is rotatable by rotating the shaft 6 by means of conventional driving device, not shown. The driving device can be arranged to rotate the bottom 4 at a rotational speed of 500 revolutions per minute.

The bars 8 of the side wall 2 and the bottom 4 are at their inner surfaces provided with a coating 20 and 22, respectively, of cutting carborundum grits. These carborundum grits form the cutting means of the peeling device and cut or grind away the peels of the vegetable products when the vegetable products are displaced in relation to and engages the surfaces coated with the carborundum grits.

A peeling device for batchwise peeling according to the invention having a peeling capacity of about 25 kg vegetable products per batch preferably has a diameter of about 700 mm and a height of about 300 mm, which means the the peeling device has a volume of somewhat more than 100 liters. When the peeling device is in operation the bottom 4 is rotated at a rotational speed which preferably is in the order of 500 revolutions per minute. The vegetable products in the peeling device are displaced under the influence of the centrifugal force towards the peripheral side wall 2, the vegetable products thereby being displaced around the peripheral section of the peeling device while engaging the side wall 2 and the bottom 4 of the peeling device in such a way, that the carborundum grits of the coatings 20 and 22 of the side wall and the bottom, respectively, successively remove the peels from the vegetable products. Because of the existence of the slots 12 in the side wall 2 and the slots of the edge portions 16 of the bottom 4 the waste material can leave the container which in a surprising way improves the effectivity of the peeling, makes the peeled product clean and makes it unnecessary to flush away the waste material by the supply of water.

After the peeling operation has been conducted with regard to the batch of vegetable products present in the peeling device the peeling device is emptied whereupon a new batch of vegetable products is supplied to the peeling device and the operation is repeated.

The invention can be modified within the scope of the following claims. This is true especially with regard to the design of the openings provided in the container constituted by the side wall 2 and the bottom 4. The openings can be of another shape than slots and can be provided only at the lower portion of the side wall 2. Also with respect to the peeling means of the peeling device and the device for providing the relative movement in relation to the peeling means the invention can be modified.

## Claims

1. A peeling device for batchwise peeling of vegetable products, comprising a container for receiving the vegetable products and comprising a circular bottom (4) and a side wall (2) which is substantially circular in horizontal section, a coating (20; 22) of cutting grits of for example carborundum provided at the inner side of the side wall (2) and/or the bottom (4) of the container for removing the peels of the vegetable products at a relative movement and engagement between the vegetable products and the coating and a device for providing said relative movement and engagement between the vegetable products and the coating, the container being provided with through openings (12; 18) adapted to allow waste material to depart from the container, **characterized** in that the through openings are constituted by radially extending slots (18) intersecting a peripheral edge portion (16) of the circular bottom (4) and by vertical slots (12) provided at least at the lower portion of the side wall (2).

2. A peeling device as claimed in claim 1, **characterized** in that the edge portion (16) of the circular bottom (4) is of somewhat conical shape providing a concave basic shape of the bottom.

3. A peeling device as claimed in claim 1 or 2, **characterized** in that the side wall (2) is constituted by a number of substantially vertically oriented bars (8) which are only at their upper ends fastened to a peripheral edge flange (10) at a distance from each other for providing the vertical slots between the bars.

4. A peeling device as claimed in any of the preceding claims, **characterized** in that the side wall (2) widens in the direction upwards.

5. A peeling device as claimed in any of the preceding claims, **characterized** in that the side wall (2) and the bottom (4) are arranged rotatably in relation to each other for providing a relative movement and engagement between the peeling means and the vegetable products.

6. A peeling device as claimed in claim 5, **characterized** in that the bottom (4) is supported by a vertical shaft (6) which is drivable for rotation of the bottom.

## Patentansprüche

1. Eine Schälvorrichtung zum partieweisen Schälen von Gemüseerzeugnissen, umfassend einen Behälter zur Aufnahme der Gemüseerzeugnisse und aufgrund einen kreisförmigen Boden (4) und eine Seitenwand (2), welche im Horizontalschnitt im wesentlichen kreisförmig ist, einen Überzug (20; 22) aus scharfen Splitten aus zum Beispiel Karborund, vorgesehen an der Innenseite der Seitenwand (2) und/oder dem Boden (4) des Behälters zum Entfemen der Schale der Gemüseerzeugnisse über eine Relativbewegung und Ineinandergreifen zwischen den Gemüseerzeugnissen und dem Überzug, und eine Vorrichtung zum Schaffen besagter Relativbewegung und Ineinandergreifen zwischen den Gemüseerzeugnissen und dem Überzug, wobei der Behälter versehen ist mit Durchgangsöffnungen (12; 18), geeignet, Abfallstoffen das Austreten aus dem Behälter zu erlauben,
**dadurch gekennzeichnet, daß**
die Durchgangsöffnungen von sich radial erstreckenden Schlitzen (18), einen Randkantenteil (16) des kreisförmigen Bodens (4) durchschneidend, und von vertikalen Schlitzen (12), vorgesehen zumindest im unteren Teil der Seitenwand (2), gebildet werden.

2. Eine Schälvorrichtung wie in Anspruch 1 beansprucht,
**dadurch gekennzeichnet, daß**
der Kantenteil (16) des kreisförmigen Bodens (4) von ein wenig konischer Form ist, eine konkave Grundform des Bodens schaffend.

3. Eine Schälvorrichtung wie in Anspruch 1 oder 2 beansprucht,
**dadurch gekennzeichnet, daß** die Seitenwand (2) von einer Anzahl im wesentlichen vertikal ausgerichteter Stäbe (8) gebildet wird, welche nur an ihren oberen Enden an einem Randkantenflansch (10) in Abstand zueinander, um die vertikalen Schlitze zwischen den Stäben zu schaffen, befestigt sind.

4. Eine Schälvorrichtung wie in einem der vorhergehenden Ansprüche beansprucht,
**dadurch gekennzeichnet, daß**
sich die Seitenwand (2) in der Richtung nach oben ausweitet.

5. Eine Schälvorrichtung wie in einem der vorhergehenden Ansprüche beansprucht,
**dadurch gekennzeichnet, daß**
die Seitenwand (2) und der Boden (4) im Verhältnis zueinander drehbar angeordnet sind, um eine Relativbewegung und Ineinandergreifen zwischen den Schälmitteln und den Gemüseerzeugnissen zu schaffen.

6. Eine Schälvorrichtung wie in Anspruch 5 beansprucht,
**dadurch gekennzeichnet, daß**
der Boden (4) von einem vertikalen Stiel (6) getragen wird, welcher zur Drehung des Bodens antreibbar ist.

## Revendications

1. Disposif d'épluchage pour éplucher des lots de légumes, comprenant un récipient pour recevoir les légumes et comprenant un fond circulaire (4) et une paroi latérale (2) qui, en coupe horizontale, est sensiblement circulaire, un revêtement (20; 22) de particules abrasives coupantes, par exemple de carborundum, formé sur le côté intérieur de la paroi latérale (2) et/ou le fond (4) du récipient pour enlever les pelures des légumes par un déplacement relatif et un contact entre les légumes et le revêtement et un dispositif pour assurer ledit déplacement relatif et le contact entre les légumes et le revêtement, le récipient étant pourvu d'ouvertures traversantes (12; 18) adaptées pour permettre à la matière de rebut de quitter le récipient, caractérisé en ce que les ouvertures traversantes sont constituées par des fentes (18) s'étendant radialement et intersectant une partie marginale périphérique (16) du fond circulaire (4) et par des fentes verticales (12) présentes au moins dans la partie inférieure de la paroi latérale (2).

2. Dispositif d'épluchage selon la revendication 1, caractérisé en ce que la partie marginale (16) du fond circulaire (4) a une forme légèrement conique donnant une forme de base concave au fond.

3. Dispositif d'épluchage selon la revendication 1 ou 2, caractérisé en ce que la paroi latérale (2) est constituée par de nombreuses barres (8) qui sont orientées de façon sensiblement verticale et qui sont fixées uniquement à leurs extrémités supérieures à un rebord périphérique (10) à une certaine distance les unes des autres pour assurer la présence de fentes verticales entre les barres.

4. Dispositif d'épluchage selon l'une quelconque des revendications précédentes, caractérisé en Ce que la paroi latérale (2) s'évase vers le haut.

5. Dispositif d'épluchage selon l'une quelconque des revendications précédentes, caractérisé en ce que la paroi latérale (2) et le fond (4) sont disposés de façon à tourner l'un par rapport à l'autre pour produire un déplacement relatif et un contact entre les moyens d'épluchage et les légumes.

6. Dispositif d'épluchage selon la revendication 5, caractérisé en ce que le fond (4) est supporté par un arbre vertical (6) qui peut être entraîné pour faire tourner le fond.
